# EUROPÄISCHE PATENTSCHRIFT

(11) **EP 1 556 268 B1**
(45) Veröffentlichungstag und Bekanntmachung des Hinweises auf die Patenterteilung: **12.04.2006**
(21) Anmeldenummer: 03773558.6
(22) Anmeldetag: 22.10.2003
(51) Int. Cl.: B62D 1/04

(54) **LENKRAD EINES KRAFTFAHRZEUGES MIT EINEM INTEGRIERTEN AIRBAGMODUL**
STEERING WHEEL OF A MOTOR VEHICLE COMPRISING AN INTEGRATED AIRBAG MODULE
VOLANT DE VEHICULE AUTOMOBILE COMPRENANT UN MODULE DE COUSSIN GONFLABLE INTEGRE

(30) Priorität: 30.10.2002 DE 10250457
(43) Veröffentlichungstag der Anmeldung: 27.07.2005
(73) Patentinhaber: Delphi Technologies Inc., Troy, MI 48007 (US)
(72) Erfinder: REICHL, Erik, 55765 Birkenfeld (DE); TRIMBORN, Ralf, 42658 Solingen (DE)
(74) Vertreter: Becker, Bernd
(86) Internationale Anmeldenummer: PCT/DE2003/003510
(87) Internationale Veröffentlichungsnummer: WO 2004/039654

(56) Entgegenhaltungen:
- DE-C- 19 914 653
- US-A- 5 303 952
- US-A- 5 331 124
- US-A- 6 147 315

## Beschreibung

Die Erfindung bezieht sich auf ein Lenkrad eines Kraftfahrzeuges mit einem integrierten Airbagmodul, das einen von einem zusammengefalteten Airbag überdeckten Airbagträger umfasst, mindestens einem Lenkradschalter und einer als eine Schleifring-Kontaktanordnung oder eine Wickelfeder ausgebildeten elektrischen Verbindungseinrichtung zu einem Bordnetz.

Aus der DE 28 10 790 B2 ist eine Schaltereinheit mit einem auf ein Mantelrohr der Lenksäule aufsteckbaren Trägergehäuse zur Aufnahme unterschiedlicher, jeweils mit einer gesonderten elektrischen Zuleitung bzw. eines gesonderten Leitungsbaums versehener Einzelschalter bekannt. Jeder Einzelschalter ist mittels in Form von Federn angeformten Vorsprüngen in Nuten des Trägergehäuses geführt und mittels Klipsverbindungen in seiner Position gehalten. Das Trägergehäuse weist einen federnden Hupenkontakt auf, dessen Anschluss von der Seite des Mantelrohres über eine weitere Leitung erfolgt, an der ein Kontaktteil angecrimpt ist. Der Stromkreis wird über eine Masseverbindung des Lenkrades geschlossen. Bei der Montage des Lenkrades muss beachtet werden, dass der Anschluss des Hupenkontaktes nicht unterbrochen wird. Die einzelnen elektrischen Anschlüsse für die Einzelschalter und den Hupenkontakt sind verhältnismäßig kostspielig und erhöhen die Fehlermöglichkeiten bei der Montage bzw. bei der Reparatur der Schaltereinheit.

Die DE 198 19 695 C2, die den Oberbegriff des Anspruchs 1 definiert, offenbart einen Lenkradschalter für ein Kraftfahrzeug mit mehreren Einzelschaltern und mit einem innerhalb des Lenkrades angeordneten Trägergehäuse zur Aufnahme eines Airbagmoduls, über das mindestens ein Hupenschalter beaufschlagbar ist. Innerhalb des Lenkrades ist eine Stützplatine festgelegt, auf der sich federbelastet, taumelnd das Trägergehäuse abstützt, wobei an dem Trägergehäuse auf der der Stützplatine zugewandten Seite eine Kontakteinheit mit Anschlusskontakten befestigt ist, die über Verbindungsleitungen die Einzelschalter kontaktierende Schalterführungen und den auf Verbindungsleitungen angeordneten Hupenschalter aufweist.

Darüber hinaus ist aus der DE 195 28 693 A1 ein Lenkrad für ein Kraftfahrzeug bekannt, in dem ein Airbag und Lenkradschalter integriert sind.

Es ist Aufgabe der Erfindung, ein Lenkrad der eingangs genannten Art zu schaffen, bei dem eine Übertragung elektrischer Signale von dem Lenkradschalter zu der Verbindungseinrichtung bei einem geringen Montageaufwand sichergestellt ist.

Erfindungsgemäß wird die Aufgabe dadurch gelöst, dass der Airbagträger Strompfade zur Kopplung der Verbindungseinrichtung mit dem Lenkradschalter aufweist.

Aufgrund dieser Maßnahme ist es nicht erforderlich, eine separate Leiterplatte bzw. Verbindungsleitungen zur Übertragung der elektrischen Signale von dem Lenkradschalter zur Verbindungseinrichtung und über diese zum Bordnetz anzuordnen. Damit ist auch ein zusätzlicher Platzbedarf für die Leiterplatte bzw. die Verbindungsleitungen vermieden, weshalb das Lenkrad einen kompakten Aufbau aufweist. Hierbei kann die Verbindungseinrichtung beispielsweise als eine Schleifring-Kontaktanordnung oder eine so genannte Wickelfeder (clockspring) ausgebildet und in ein mantelrohrfestes Lenkstockmodul, das Lenkrad oder ein separates Gehäuse integriert sein. Es ist auch möglich, neben dem mindestens einen Lenkradschalter eine Anzeigeeinrichtung in das Lenkrad zu integrieren und über die Strompfade des Airbagträgers mit dem Bordnetz zu koppeln. Selbstverständlich können die Strompfade nicht nur der Energieversorgung sondern auch dem Datenaustausch dienen.

Zur relativ einfachen Montage mehrerer Lenkradschalter ist vorzugsweise der Airbagträger mit mindestens zwei zueinander beabstandeten Laschen zur Befestigung und elektrischen Kontaktierung von Lenkradschaltern versehen. Die Beabstandung der Laschen zueinander ist beispielsweise derart bemessen, dass zwischen den Laschen der Airbag mit einer denselben überspannenden Abdeckung untergebracht werden kann.

Zweckmäßigerweise umfasst jede der Laschen eine in Richtung des zugeordneten Lenkradschalters weisende Steckverbindung mit Anschlusskontakten, wobei die Anschlusskontakte zum einen mit Kontakten des Lenkradschalters und zum anderen mit den Strompfaden verbunden sind. Die elektrische Verbindung ist somit durch einfaches Aufstecken des Lenkradschalters auf die Steckverbindung des Airbagträgers zu bewerkstelligen.

Zur Reduzierung der Anzahl der am Lenkrad zu montierenden Einzelteile weist bevorzugt jede der Laschen ein einstückig damit ausgebildetes Gehäuse des Lenkradschalters zur Aufnahme von Schaltkontakten sowie zur Lagerung mindestens eines Betätigungselementes auf.

Um eine einfach herzustellende elektrische Verbindung zwischen dem Lenkrad und dem Bordnetz zu gewährleisten, ist am Airbagträger ein Stecker zur Kopplung mit Steckkontakten der Verbindungseinrichtung angeformt. Zweckmäßigerweise ist der Stecker des Airbagträgers mit den Strompfaden verbunden.

Nach einer vorteilhaften Ausgestaltung der Erfindung ist die Verbindungseinrichtung mit einer zentralen Leiterplatte eines mantelrohrfesten Lenkstockmoduls mit Lenkstockschaltern verbunden, die wiederum an das Bordnetz angeschlossen ist. Der zentralen Leiterplatte können beispielsweise elektronische Bauteile zur Auswertung der über die Strompfade und die Verbindungseinrichtung von den Lenkradschaltern empfangenen Signale zugeordnet sein, so dass die Lenkradschalter lediglich einen geringen Einbauraum im Lenkrad beanspruchen und wesentliche Funktionen außerhalb des Lenkrades platziert sind.

Vorzugsweise weist der Airbagträger mindestens einen Hupenkontakt auf, der über die Strompfade an die Verbindungseinrichtung angeschlossen ist. Somit ist auch der Hupenkontakt zur Verbindung mit dem Bordnetz bzw. der Verbindungseinrichtung nicht separat zu verkabeln. Die Kontaktierung findet vielmehr über die Strompfade des Airbagträgers statt.

Nach einer weiteren Ausgestaltung der Erfindung ist der Airbagträger aus Kunststoff gefertigt. Damit ist eine direkte Zuordnung der Strompfade zu dem Airbagträger sichergestellt, da der Airbagträger selbst aus einem Isolationswerkstoff gefertigt ist.

Zweckmäßigerweise sind die Strompfade als Stanzgitter ausgebildet, das unter Freilassung von Kontaktzonen für die Anschlusskontakte und/oder den Stecker in den Airbagträger eingespritzt ist. Die Strompfade sind somit im Wesentlichen in den Kunststoff des Airbaggehäuses eingelassen und damit gleichzeitig elektrisch isoliert.

Alternativ sind bevorzugt die Strompfade gemeinsam mit dem Airbagträger in MID-Technik gefertigt. Bei der MID-Technik (MID = moulded interconnect devices) handelt es sich um ein Herstellverfahren für einen spritzgegossenen Schaltungsträger in Zwei-Komponenten-Spritzgusstechnik, bei dem die Funktionen Airbagträger bzw. Gehäuse, Leiterplatte und Steckverbindungen in einem Bauteil vereint sind. Hierbei kann eine der Kunststoffkomponenten durch Zuschläge entweder selbst leitfähig oder metallisierbar sein.

Weiterhin bestehen alternativ vorteilhafterweise die Strompfade aus einem mit Kupfer versehenen auf den Airbagträger aufgebrachten Leitlack. Der Leitlack wird im Siebdruckverfahren auf den Airbagträger aufgebracht und bestimmt das Layout der Strompfade. Nach dem Auftragen des Leitlackes wird dieser mit Kupfer versehen. Selbstverständlich sind weitere Ausgestaltungen der Strompfade sowie Herstellverfahren zur Ausbildung der Strompfade denkbar.

Nach einer weiteren alternativen Ausgestaltung der Erfindung sind die Strompfade Bestandteil einer auf dem Airbagträger befestigten flexiblen Leiterplatte. Die Strompfade sind nahezu vollständig von dem isolierenden Werkstoff der Leiterplatte umhüllt, die auf den aus einem Metall oder Kunststoff gefertigten Airbagträger beispielsweise aufgeklebt wird, wobei sich die flexible Leiterplatte an die Kontur des Airbagträgers anpasst.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigen:

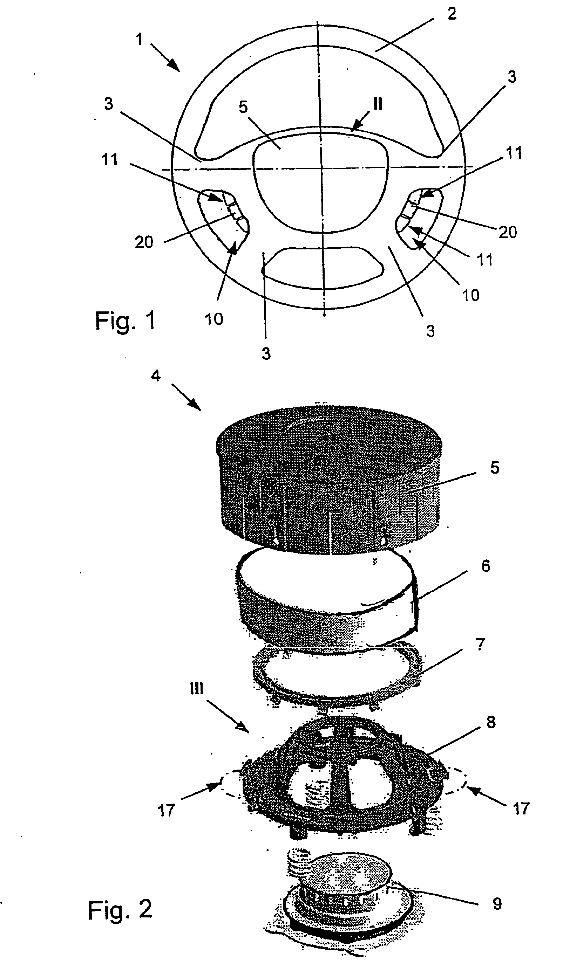

- Fig.1: eine Draufsicht auf ein erfindungsgemäßes Lenkrad,
- Fig.2: eine perspektivische Darstellung der Einzelheit II nach Fig. 1,

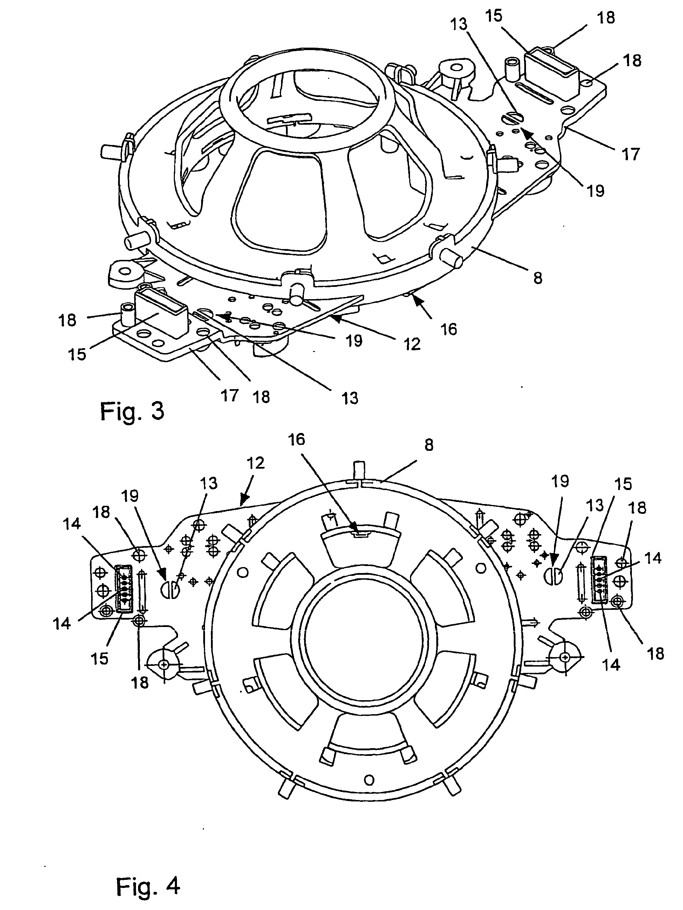

- Fig.3: eine vergrößerte Darstellung der Einzelheit III nach Fig. 2,
- Fig.4: eine Draufsicht auf die Darstellung nach Fig. 3 und

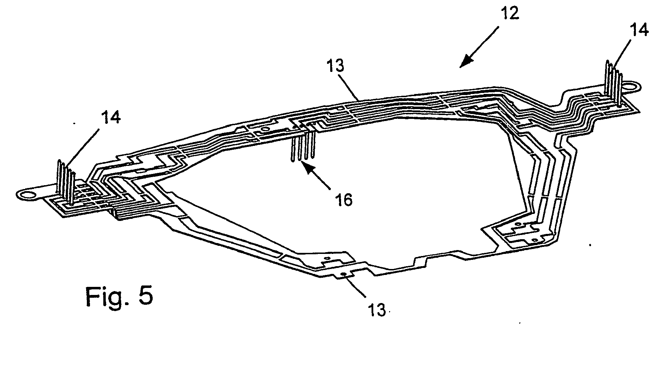

- Fig.5: eine Darstellung von in die Einzelheit III nach Fig. 2 integrierten Strompfaden.

Das Lenkrad 1 eines Kraftfahrzeuges weist einen Lenkradkranz 2 auf, der über Lenkradspeichen 3 mit einer ein Airbagmodul 4 aufnehmenden Lenkradschüssel 5 verbunden ist. Das Airbagmodul 4 umfasst eine Abdeckung 5 für einen Airbag 6, der im zusammengefalteten Zustand mittels eines Halterings 7 auf einem aus Kunststoff gefertigten Airbagträger 8 oberhalb eines Gasgenerators 9 angeordnet ist. Unterhalb des Lenkrades 1 ist ein nicht dargestelltes Lenkstockmodul mit Lenkstockschaltern und mit einer zentralen Leiterplatte mantelrohrfest angeordnet, das eine elektrische Verbindungseinrichtung aufnimmt.

Im Weiteren sind dem Lenkrad 1 zwei gegenüberliegende Schaltereinheiten 10 zugeordnet, die jeweils mehrere einzelne Lenkradschalter 11 umfassen, von denen die Betätigungselemente 20 erkennbar sind. Zur elektrischen Verbindung der Lenkradschalter 11 mit einem Bordnetz des Kraftfahrzeuges über die Verbindungseinrichtung besitzt der Airbagträger 8 als umspritztes Stanzgitter 12 ausgebildete Strompfade 13, die zum einen mit Anschlusskontakten 14 von Steckverbindungen 15 für die Lenkradschalter 11 und zum anderen mit einem Stecker 16 für die als so genannte clockspring ausgebildete Verbindungseinrichtung in Verbindung stehen. Die Steckverbindungen 15 sind auf mit dem Airbagträger 8 einstückig verbundenen Laschen 17 ausgeformt, die sowohl Befestigungsbohrungen 18 für die die Lenkradschalter 11 umfassenden Schaltereinheiten 10 als auch Trennstellen 19 für die Strompfade 13 aufweisen.

Die Schaltsignale der Lenkradschalter 11 werden zur Auswertung über die Strompfade 13 sowie die Verbindungseinrichtung an die Leiterplatte des Lenkstockmoduls übertragen und gelangen von dort zum Bordnetz des Kraftfahrzeuges.

## Patentansprüche

1. Lenkrad eines Kraftfahrzeuges mit einem integrierten Airbagmodul (4), das einen von einem zusammengefalteten Airbag (6) überdeckten Airbagträger (8) umfasst, mindestens einem Lenkradschalter (11) und einer als eine Schleifring-Kontaktanordnung oder eine Wickelfeder ausgebildeten elektrischen Verbindungseinrichtung zu einem Bordnetz, **dadurch gekennzeichnet, dass** der Airbagträger (8) Strompfade (13) zur Kopplung der Verbindungseinrichtung mit dem Lenkradschalter (11) aufweist.

2. Lenkrad nach Anspruch 1, **dadurch gekennzeichnet, dass** der Airbagträger (8) mit mindestens zwei zueinander beabstandeten Laschen (17) zur Befestigung und elektrischen Kontaktierung von Lenkradschaltern (11) versehen ist.

3. Lenkrad nach Anspruch 2, **dadurch gekennzeichnet, dass** jede der Laschen (17) eine in Richtung des zugeordneten Lenkradschalters (11) weisende Steckverbindung (15) mit Anschlusskontakten (14) umfasst, wobei die Anschlusskontakte (14) zum einen mit Kontakten des Lenkradschalters (11) und zum anderen mit den Strompfaden (13) verbunden sind.

4. Lenkrad nach Anspruch 2 oder 3, **dadurch gekennzeichnet, dass** jede der Laschen (17) ein einstückig damit ausgebildetes Gehäuse des Lenkradschalters (11) zur Aufnahme von Schaltkontakten sowie zur Lagerung mindestens eines Betätigungselementes (20) aufweist.

5. Lenkrad nach einem der Ansprüche 1 bis 4, **dadurch gekennzeichnet, dass** am Airbagträger (8) ein Stecker (16) zur Kopplung mit Steckkontakten der Verbindungseinrichtung angeformt ist.

6. Lenkrad nach Anspruch 5, **dadurch gekennzeichnet, dass** der Stecker (16) des Airbagträgers (8) mit den Strompfaden (13) verbunden ist.

7. Lenkrad nach einem der Ansprüche 1 bis 6, **dadurch gekennzeichnet, dass** die Verbindungseinrichtung mit einer zentralen Leiterplatte eines mantelrohrfesten Lenkstockmoduls mit Lenkstockschaltern verbunden ist, die wiederum an das Bordnetz angeschlossen ist.

8. Lenkrad nach einem der Ansprüche 1 bis 7, **dadurch gekennzeichnet, dass** der Airbagträger (8) mindestens einen Hupenkontakt aufweist, der über die Strompfade (13) an die Verbindungseinrichtung angeschlossen ist.

9. Lenkrad nach einem der Ansprüche 1 bis 8, **dadurch gekennzeichnet, dass** der Airbagträger (8) aus Kunststoff gefertigt ist.

10. Lenkrad nach einem der Ansprüche 1 bis 9, **dadurch gekennzeichnet, dass** die Strompfade (13) als Stanzgitter (12) ausgebildet sind, das unter Freilassung von Kontaktzonen für die Anschlusskontakte (14) und/oder den Stecker (16) in den Airbagträger (8) eingespritzt ist.

11. Lenkrad nach einem der Ansprüche 1 bis 9, **dadurch gekennzeichnet, dass** die Strompfade (13) gemeinsam mit dem Airbagträger (8) in MID-Technik gefertigt sind.

12. Lenkrad nach einem der Ansprüche 1 bis 8, **dadurch gekennzeichnet, dass** die Strompfade (13) aus einem mit Kupfer versehenen auf den Airbagträger (8) aufgebrachten Leitlack bestehen.

13. Lenkrad nach einem der Ansprüche 1 bis 9, **dadurch gekennzeichnet, dass** die Strompfade (13) Bestandteil einer auf dem Airbagträger (8) befestigten flexiblen Leiterplatte sind.

## Claims

1. Steering wheel of a motor vehicle with an integrated airbag module (4), comprising an airbag carrier (8) covered by a folded airbag (6), at least one steering wheel switch (11) and an electrical connecting device to an onboard network, constructed as a slip ring contact arrangement or a volute spring, **characterised in that** the airbag carrier (8) has current paths (13) for coupling the connecting device to the steering wheel switch (11).

2. Steering wheel according to claim 1, **characterised in that** the airbag carrier (8) is fitted with at least two clips (17), spaced apart from one another, for fastening and electrically contacting steering wheel switches (11).

3. Steering wheel according to claim 2, **characterised in that** each of the clips (17) comprises a plug-type connector (15), pointing in the direction of the allocated steering wheel switch (11), with terminal contacts (14), wherein the terminal contacts (14) are connected on the one hand to contacts of the steering wheel switch (11) and on the other hand to the current paths (13).

4. Steering wheel according to claim 2 or 3, **characterised in that** each of the clips (17) comprises a housing of the steering wheel switch (11), constructed in one piece therewith, for accommodating switching contacts and for holding at least one actuating element (20).

5. Steering wheel according to one of claims 1 to 4, **characterised in that** a connector (16) for coupling to plug-in contacts of the connecting device is moulded on to the airbag carrier (8).

6. Steering wheel according to claim 5, **characterised in that** the connector (16) of the airbag carrier (8) is connected to the current paths (13).

7. Steering wheel according to one of claims 1 to 6, **characterised in that** the connecting device is connected to a central conductor plate of a steering column module, fixed to the steering column tube, by steering column switches which are in turn connected to the onboard network.

8. Steering wheel according to one of claims 1 to 7, **characterised in that** the airbag carrier (8) has at least one hooter contact which is connected to the connecting device via the current paths (13).

9. Steering wheel according to one of claims 1 to 8, **characterised in that** the airbag carrier (8) is made of plastics material.

10. Steering wheel according to one of claims 1 to 9, **characterised in that** the current paths (13) are constructed as a pressed screen (12), which is injected on, leaving contact zones open for the terminal contacts (14) and/or the connector (16) into the airbag carrier (8).

11. Steering wheel according to one of claims 1 to 9, **characterised in that** the current paths (13) are made jointly with the airbag carrier (8) by the MID technique.

12. Steering wheel according to one of claims 1 to 8, **characterised in that** the current paths (13) consist of a conductive paint, provided with copper and applied to the airbag carrier (8).

13. Steering wheel according to one of claims 1 to 9, **characterised in that** the current paths (13) are part of a flexible conductor plate fastened on the airbag carrier (8).

## Revendications

1. Volant de direction d'un véhicule avec un module d'airbag intégré (4) qui comprend un support d'airbag (8) recouvert d'un airbag (6) plié, au moins un commutateur de volant de direction (11) et un dispositif de liaison électrique formé comme un agencement de contact à bague glissante ou un ressort spiral sur un réseau de bord, **caractérisé en ce que** le support d'airbag (8) présente des chemins de courant (13) pour coupler le dispositif de liaison au commutateur de volant de direction (11).

2. Volant de direction selon la revendication 1, **caractérisé en ce que** le support d'airbag (8) est muni d'au moins deux pattes (17) distantes l'une de l'autre pour la fixation et le contact électrique de commutateurs de volant de direction (11).

3. Volant de direction selon la revendication 2, **caractérisé en ce que** chacune des pattes (17) comprend une liaison à fiches (15) avec des contacts de connexion (14), orienté dans la direction du commutateur de volant de direction (11) associée, les contacts de connexion (14) étant reliés d'une part à des contacts du commutateur de volant de direction (11) et d'autre part aux chemins de courant (13).

4. Volant de direction selon la revendication 2 ou 3, **caractérisé en ce que** chacune des pattes (17) présente un boîtier du commutateur de volant de direction (11) formant ainsi un monobloc pour recevoir des contacts de connexion ainsi que pour placer au moins un élément de fixation (20).

5. Volant de direction selon l'une des revendications 1 à 4, **caractérisé en ce que** sur le support d'airbag (8) est formé un connecteur (16) pour le couplage avec des contacts de connexion du dispositif de liaison.

6. Volant de direction selon la revendication 5, **caractérisé en ce que** le connecteur (16) du support d'airbag (8) est relié aux chemins de courant (13).

7. Volant de direction selon l'une des revendications 1 à 6, **caractérisé en ce que** le dispositif de liaison est relié à une plaque de conducteur centrale d'un module d'arbre de direction renforcé par un tube-corps avec des contacts d'arbre de direction qui à leur tour sont connectés au réseau de bord.

8. Volant de direction selon l'une des revendications 1 à 7, **caractérisé en ce que** le support d'airbag (8) présente au moins un contact d'avertisseur qui est connecté par les chemins de courant (13) au dispositif de liaison.

9. Volant de direction selon l'une des revendications 1 à 8, **caractérisé en ce que** le support d'airbag (8) est fabriqué en matière plastique.

10. Volant de direction selon l'une des revendications 1 à 9, **caractérisé en ce que** les chemins de courant (13) sont formés comme une grille estampée (12) qui est injectée dans le support d'airbag (8) lorsque les zones de contact des contacts de connexion (14) et/ou du connecteur sont libérées.

11. Volant de direction selon l'une des revendications 1 à 9, **caractérisé en ce que** les chemins de courant (13) conjointement avec le support d'airbag (8) sont fabriqués en technique MID.

12. Volant de direction selon l'une des revendications 1 à 8, **caractérisé en ce que** les chemins de courant (13) sont composés d'un vernis conducteur muni de cuivre placé sur le support d'airbag (8).

13. Volant de direction selon l'une des revendications 1 à 9, **caractérisé en ce que** les chemins de courant (13) sont une partie constitutive d'une plaque de conducteur flexible fixée sur le support d'airbag (8).
